(19)

Europäisches
Patentamt
European
Patent Office
Office européen
des brevets

(11) **EP 3 913 547 A1**

(12) **EUROPEAN PATENT APPLICATION**

(43) Date of publication:
**24.11.2021 Bulletin 2021/47**

(51) Int Cl.:
***G06N 7/00*** *(2006.01)*

(21) Application number: **20175440.5**

(22) Date of filing: **19.05.2020**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Robert Bosch GmbH
70442 Stuttgart (DE)**

(72) Inventors:
• **Lindinger, Jakob
  71272 Renningen (DE)**
• **Reeb, David
  71272 Renningen (DE)**
• **Rakitsch, Barbara
  70193 Stuttgart (DE)**
• **Lippert, Christoph
  10247 Berlin (DE)**

(54) **MODELLING INPUT-OUTPUT RELATION OF COMPUTER-CONTROLLED ENTITY**

(57)    A computer-implemented method and system are provided for training a Deep Gaussian Process, DGP, model to model the relation between control input of a computer-controlled entity and observable output. In the DGP model, a selective coupling is provided between GPs at a same position across the hidden layers, and between each position in the output layer to each position in each hidden layer. Such couplings may visually represent a STripes-and-ARrow (STAR) pattern, which may enable the DGP model to accurately model relations between control input and observable output while providing well-calibrated uncertainty estimates, while at the same time enabling training with a greatly reduced computational complexity, meaning a faster convergence to an optimal solution.

Fig. 3

EP 3 913 547 A1

**Description**

**FIELD OF THE INVENTION**

The invention relates to a system and computer-implemented method for training a machine learnable model to learn a relation between control input of a computer-controlled entity and observable output which results from an operation of the computer-controlled entity under control of the control input. The invention further relates to a method of operating a test bench for the computer-controlled entity. The invention further relates to a computer-readable medium comprising transitory or non-transitory data representing instructions for a processor system to perform the computer-implemented method.

**BACKGROUND OF THE INVENTION**

Many entities are nowadays controlled by computers, which may be locally embedded computers, e.g., microprocessors or microcontrollers, but which may also be remote computers, e.g., a server or a 'cloud'. Examples of such entities include, but are not limited to, robots, vehicles, domestic appliances, power tools, manufacturing machines, personal assistant devices and access control systems, but also include components such as fuel cells and combustion engines of which the operation is computer-controlled. In general, such entities may include apparatuses, machines, devices, systems, etc.

The control of such entities may not be trivial. For example, controlling a robotic arm to assume a position in a workspace may involve carefully constructed kinematics models to establish a relation between positioning commands provided to the robotic arm and the actual position of the robotic arm in a physical workspace. Knowing this relation, the robotic arm may be controlled in a reliable and safe manner. Another example is the control of a combustion engine, in which operating parameters by which the operation of the combustion engine is controlled may affect the operating performance and emission levels of the engine. Knowing this relation, the combustion engine may be controlled to operate in an operational envelope providing optimal performance and low emission levels.

In general, there may be a need to learn a relation between a control input of a computer-controlled entity and observable output which results from an operation of the computer-controlled entity under control of the control input. Such control input may for example include the aforementioned positioning commands and operating parameters, and may in general represent any type of input which defines an aspect of the operation of the computer-controlled entity. The observable output may be an observable, e.g., sensor-measurable, characteristic resulting from the operation of the computer-controlled entity, which may in general include any type of measurable physical quantity, such as a position and/or an orientation in physical space, a speed, a temperature, an emission level, etc. The measurable physical quantity may pertain to the computer-controlled entity itself, to the environment in which the entity operates, or to a combination of both. An example of the latter is the position of a robotic arm relative to another object in its environment.

It is known to model such relations manually. In the aforementioned example of the robotic arm, such a relation may be modeled on the basis of kinematic modelling of the robotic arm, e.g., using a set of equations. Such a relation may also be modeled by testing a computer-controlled entity on a test bench, which may involve providing a test input, e.g., an operating parameter of a combustion engine, and measuring an output, e.g., a level and/or type of emissions generated by the combustion engine. Based on a number of such test inputs and measured outputs, the relation may be manually modeled, e.g., by a user recognizing the relation in the test data, or by manual mathematical modeling.

Disadvantageously, such manual modeling of relations between control input and observable output may be complex and time intensive. In particular, if the control input space is multidimensional, e.g., comprising different operating parameters, and/or if the observable output space is multidimensional, e.g., comprising different measurable characteristics, it may be difficult or even impossible to adequately model the relation.

It is known to use machine learnable models to learn the relation between control input of a computer-controlled entity and observable output. Such machine learning may also be referred to as 'training', and typically uses training data, which may take the form of pairs of control input points and observed output points. For example, Gaussian Processes (GPs) may be used to learn distributions over unknown functions from data, with the aforementioned relation between control input and observable output representing an example of such an unknown function. Such GPs provide a non-parametric framework in which the posterior distribution may be computed in closed-form and which may return well-calibrated uncertainty estimates, making them particularly useful in safety critical applications, Bayesian optimization and active learning. However, the analytical tractability of GPs comes at the price of reduced flexibility: standard kernel functions make strong assumptions such as stationarity or smoothness, which means that GPs may not be flexible enough to learn certain types of relations between control inputs and observable outputs.

To make GPs more flexible, a practitioner would have to come up with hand-crafted features or kernel functions, the latter resulting in the model having additional hyperparameters. Both alternatives require expert knowledge and are prone to overfitting.

Deep Gaussian Processes (DGPs) offer a compelling alternative to GPs since they learn non-linear feature representations in a fully probabilistic manner via GP cascades. However, this additional flexibility may mean that inference may no longer be performed in closed-form, but may need to be approximated via Monte Carlo sampling or via deterministic approximations. A popular approximation, variational inference (VI), searches for the best approximate posterior within a pre-defined class of distributions: the variational family. For GPs, variational approximations often build on an inducing point framework [1] where a small set of global latent variables act as pseudo datapoints $(x_M, f_M)$ that summarise the training data. For DGPs, each latent GP may be governed by its own set of inducing variables, which, in general, need not be independent from the inducing variables of other latent GPs.

In [2], it is assumed that inducing outputs are distributed according to a multivariate Gaussian distribution and that GPs are independent from each other ('mean-field assumption'). These approximations allow to analytically marginalize out the inducing outputs, which means that the DGP may converge faster to an optimal solution during training, compared to approximations in which inducing outputs are not marginalized out.

In [3], the mean-field assumption across layers is relaxed, and dependencies between the layers of the DGP are introduced by linking the inducing points and locations of the neighboring layers. An analytic marginalization of the inducing outputs is described.

Disadvantageously, the DGP model and its training described by [2] is insufficiently flexible, meaning that the DGP model may be unable to adequately capture certain relations between control inputs of a computer-controlled entity and observable outputs. This may mean that the trained DGP model may provide insufficiently accurate predictions and insufficiently calibrated uncertainty estimates for such predictions. While [3] provides more flexibility, it does assume conditional independence between non-neighboring layers, which may be a too strong assumption and may thereby result in its model being unable to adequately capture certain relations between control inputs and observable outputs, and/or to provide well-calibrated uncertainty estimates for such control inputs.

## REFERENCES

[1] Snelson, Edward, et al. "Sparse Gaussian Processes using Pseudo-inputs", Advances in Neural Information Processing Systems 18 (NIPS 2005)

[2] Salimbeni, Hugh, et al. "Doubly Stochastic Variational Inference for Deep Gaussian Processes", https://arxiv.org/abs/1705.08933

[3] Ustyuzhaninov, Ivan, et al. "Compositional uncertainty in deep Gaussian processes", https://arxiv.org/abs/1909.07698v3

## SUMMARY OF THE INVENTION

It would be desirable to be able to train a Deep Gaussian Process, DGP, model to model the relation between control input of a computer-controlled entity and observable output, which addresses at least one of the disadvantages mentioned above.

In accordance with a first aspect of the invention, a computer-implemented method and corresponding system are provided, as defined by claim 1 and 14 respectively, for training a machine learnable model to learn an unknown function $f$ which represents a relation between control input of a computer-controlled entity and observable output which results from an operation of the computer-controlled entity under control of the control input.

In accordance with a further aspect of the invention, a computer-readable medium is provided, as defined by claim 13, comprising instructions for causing a processor system to perform the computer-implemented method of any one of claims 1 to 8.

The above measures provide a method and system for training a DGP model which comprises at least one hidden layer and an output layer, with each layer comprising a number of Gaussian Processes, GPs, and in which the output layer is additionally provided with a likelihood function. For the training, training data is accessed which may be comprised of data pairs each having a) an input point, which represents a control input, and b) an observed output point. Here, the term 'point' may refer to a scalar, e.g., a one-dimensional point, or to a vector, e.g., a multi-dimensional point. In a specific example, the input points may each represent a vector defining a number of operational parameters of a combustion engine, and the output points may each represent measured outputs of the engine, e.g., in terms of performance and/or emissions. Such data may for example be obtained from a test bench in which the operation of the computer-controlled entity is tested by providing control input as test input to the computer-controlled entity and by measuring output characteristics which result from the operation of the computer-controlled entity given this test input. Such output characteristics may be measured by one or more sensors, which may be part of the computer-controlled entity or placed in its environment, or a combination of both.

The DGP model may be trained using the trained data and using a variational invariance technique by which the posterior probability distribution $p$ to be learned is approximated by an approximated probability distribution $q$. The use of such variational approximations, i.e., approximation by variational inference, for training DGP models is known per se, e.g., from the aforementioned [2] and [3] which are hereby incorporated by reference in as far as relating to the training of the DGP model by variational inference, and may comprise maximizing an evidence lower bound $\mathcal{L}$ with respect to a set of parameters of the respective GPs so as to fit the DGP model to the training data, or equivalently, minimizing the Kullback-Leibler (KL) divergence $KL[q\|p]$. This set of parameters may include hyper- and variational parameters, such as kernel parameters, noise level, variational parameters and locations of inducing points.

More specifically, the DGP model may be trained by execution of a computer-implemented algorithm, by which the evidence lower bound $\mathcal{L}$ may be calculated based on sampled layer outputs $f_n$ of respective layers of the DGP model, wherein a layer output at a respective layer is defined by the algorithm to be distributed according to a multivariate Gaussian distribution. The assumption of layer outputs being distributed according to multivariate Gaussian distributions conditioned on the previous outputs is also used by [2]. In another similarity to [2], the sampled layer outputs $f_n$ may be calculated by, for each layer, calculating a mean $\mu_n$ and a covariance $\Sigma_n$ of the multivariate Gaussian distribution using a mean-field approximation which assumes independence between GPs.

However, unlike [2], a correction term may be applied to the respective mean-field values, with the mean-field values being elsewhere also referred to as 'base values'. This correction term may establish a selective coupling between GPs at a same position across the hidden layers, and may couple each position in the output layer to each position in each hidden layer. In other words, this coupling may have a specific form, in that in a covariance matrix, such selective coupling may represent a stripes and arrow pattern, in which diagonal stripes (selective coupling to GPs at a same position in previous hidden layers) and horizontal and vertical stripes (selective coupling from the output layer to GPs at each position in each previous hidden layer) together form what is elsewhere also referred to as a STAR (STripes and ARrow) pattern. Effectively, the correction term may be considered to represent a weighted sum of residuals in previous layers, and thereby a deviation of the sampled outputs from the mean given by the mean-field values. The effect of using the correction terms in each layer may be a reduction of the uncertainty in a particular layer due to the already obtained knowledge (sampled layer outputs) in the previous layers. The correction term may equivalently be interpreted as a weighted sum over the precision matrix of the previous layers. In general, the stronger the coupling is, the more the uncertainty may be reduced.

Reference [3] also provide two approaches for coupling: Their first approach fully couples GPs between layers and thus not selectively in the manner as claimed. Such full coupling, which elsewhere also referred to as 'FC', has the disadvantage that the computational complexity of calculating the evidence lower bound (ELBO) is relatively high. Additionally, the need to sample the inducing outputs may result in that the training of the DGP model may only relatively slowly converge to an optimal solution. This means that the FC-approach may not, or only insufficiently scale to a larger number of latent GPs, which may be required in many practical applications, such as when modelling the relation between control input, e.g., operating parameters, of a combustion engine and performance and emission levels resulting from the combustion engine's operation. In the second approach described by [3], the GPs are coupled between adjacent layers. This approach, however, is different from the claimed a) coupling of GPs between all layers at the same position and b) the coupling between all GPs in a respective intermediate layer and the output layer.

Surprisingly, the inventors have recognized that the STAR-approach retains much of the flexibility of the FC-approach, meaning that the DGP model is able to accurately model relations between control input and observable output while providing well-calibrated uncertainty estimates, while at the same time having a greatly reduced computational complexity, meaning that an optimal solution may be obtained faster.

Namely, the inventors have recognized that select positions in the covariance matrix receive large values during training and are thus of particular relevance. By maintaining these positions, e.g., by calculating the elements of the covariance matrix at these positions, and by setting the other positions of the covariance matrix to zero, a surprising optimum is obtained between the flexibility of the FC-approach and the relatively low computational complexity of the mean-field approach. Indeed, as also elucidated in the detailed description, the computational complexity of calculating the evidence lower bound is only modestly increased over that of the mean-field approach [2], while at the same time, the flexibility of the FC-approach may be largely maintained, meaning that DGP model may provide accurate predictions and well-calibrated uncertainty estimates for such predictions. This may make the STAR-approach particularly well-suited for many practical applications which involve large datasets and/or applications in which uncertainty estimates play an important role. As elucidated elsewhere, this includes safety critical applications, but also applications such as active learning in which the uncertainty estimates of the DGP model may be used to identify which further test points are needed for a further training of the DGP model.

In an embodiment, the approximation by the variational inference is a sparse approximation in which inducing input points $x_M$ are used, with $M \ll N$, to generate inducing function outputs $f_M$ which act as global latent parameters of the DGP model. In an embodiment, the variational inference searches for an approximated probability distribution

$p(f_N|f_M)q(f_M)$ for the posterior probability distribution $p(f_N,f_M|y_N)$, wherein the inducing function outputs $f_M$ are distributed according to a multivariate Gaussian distribution. Such variational approximation using inducing points is known per se, e.g., from the aforementioned [1] but also from [2] and [3] which employ inducing points within the context of DGP models. For example, the inducing input points $x_M$ may be obtained as a selection of input points $x_N$, or in general as arbitrary points from a same space as $x_N$.

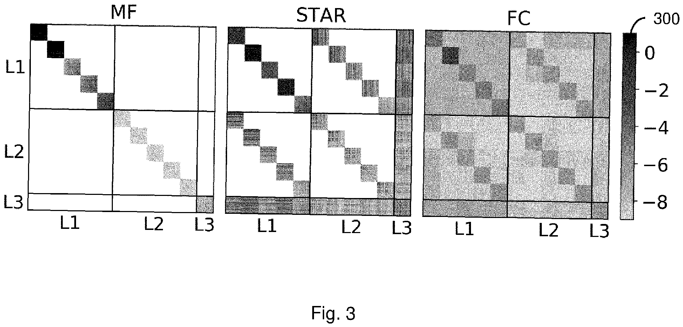

In an embodiment, each correction term is calculated based on a variational posterior over the inducing outputs $f_M$ and the sampled layer outputs $f_n$ of previous layers, wherein the correction term for the mean $\mu_n$ is a weighted sum of residuals of the previous layers, wherein the correction term for the covariance $\Sigma_n$ is a weighted sum over a precision matrix of the previous layers, wherein weights for said weighted sums are obtained from a covariance matrix $S_M$, wherein elements of the covariance matrix $S_M$ inferred during training at select positions representing the coupling between GPs at the same position in different hidden layers and the coupling between GPs at each position in each hidden layer to the output layer. The covariance matrix may effectively resemble that of Fig. 3B showing the STAR pattern, but may be adjusted to any desired number of hidden layers (Fig. 3B shows two hidden layers L1, L2).

In an embodiment, the algorithm comprises a nested loop which comprises:

an outer loop progressing through the hierarchy of layers $L$ towards the output layer, the outer loop being configured to use the sampled layer outputs $f_n$ of a respective layer to calculate the evidence lower bound $\mathcal{L}$ to be maximized;

a middle loop in which the mean $\mu_n$ and the covariance $\Sigma_n$ of the multivariate Gaussian distribution are calculated based on the respective base values and the respective correction terms and in which the multivariate Gaussian distribution is sampled; and

an inner loop in which elements of a covariance matrix $\tilde{S}_n$, which is needed for the calculation of the correction terms in the middle loop, are calculated for every sample based on the covariance matrix $S_M$.

The general form of calculating the evidence lower bound $\mathcal{L}$ based on sampled layer outputs $f_n$ of respective layers of the DGP model using three nested loops is known per se from [2]. Compared to [2], the middle loop is now adapted to take the correction terms into account in the calculation of the mean $\mu_n$ and the covariance $\Sigma_n$, while the inner loop extends the selective coupling of layers to the current sample.

In an embodiment, the outer loop comprises averaging over multiple sampled layer outputs to reduce noise. This may result in an increased noise-robustness of the DGP model after training. In an embodiment, the outer loop comprises using only a subset of the training data. This may be used to obtain a noisy but fast approximation of the evidence lower bound $\mathcal{L}$, and/or may allow scaling to larger datasets.

In an embodiment, the machine learnable model is used after training to infer an output which results from the operation of the computer-controlled entity under control of a given control input. The machine learnable model after training may also be referred to as a machine 'learned' model or a trained DGP model. The machine learned model may after training be used to infer, e.g., predict, an output given an actual or hypothetical control input of the computer-controlled entity. In addition to the inferred output, also a prediction uncertainty may be given. The inferred output and prediction uncertainty may be used for various purposes, for example to control the computer-controlled entity based on the inferred output. A specific example is that the machine learned model may be used to control a combustion engine in a vehicle after manufacture. Namely, the machine learned model may have been trained to predict performance and emission levels from control input of the combustion engine. While such performance and emission levels may be measured during manufacture, e.g., on a test bench, once installed into an actual vehicle, there may be insufficient measurement data available, for example by there being fewer sensors compared to the test bench. In such a setting, the machine learned model may be used to predict the performance and emission levels, thereby reducing the need to measure these levels in this setting. Effectively, the machine learned model may simulate the test bench after deployment.

In several embodiments, the training is performed as part of a method of operating a test bench in which the computer-controlled entity is tested.

In an embodiment, a method of operating a test bench comprises:

- testing a computer-controlled entity by providing control input to the computer-controlled entity to control an operation of the computer-controlled entity;
- observing output associated with computer-controlled entity which results from the operation of the computer-controlled entity;
- using the computer-implemented method for training the machine learnable model as described above to train a machine learnable model to learn an unknown function $f$ which represents a relation between the control input and the observed output, wherein the training data for the machine learnable model comprises point-pairs of respective control input and observed output.

Such test benches may be used before or during manufacture of the computer-controlled entity, for example to validate or improve the performance of the computer-controlled entity. On such a test bench, the computer-controlled entity may be subjected to test inputs, referring to control inputs provided for testing purposes. The resulting outputs may then be measured, for example by one or more sensors. The combination of test inputs and measured outputs may be used as training data to train the machine learnable model. A specific example is that a combustion engine may be tested on a test bench by controlling various operational parameters of the combustion engine while measuring performance and emission levels, for example using internal and/or external sensors ('internal' here referring to being part of the combustion engine).

In an embodiment, the method of operating the test bench further comprises using the machine learnable model for active learning by using an uncertainty estimate provided by the machine learnable model to identify other control input to be tested. As is known per se, active learning involves a machine learnable model being trained on training data, with the training method or system suggesting which further input data is to be labeled for the training of the machine learnable model. In the present context, the term 'labeled' may refer to the existence of measured outputs for the further input data, thereby allowing the further input data to be used for the training of the machine learnable model. Accordingly, in such active learning, the machine learnable model may be trained on a first set of training data. Having initially trained the machine learnable model, other control input may be identified to be tested. In particular, the uncertainty estimates provided by the machine learnable model may be used to identify such other control input, in that other control input may be identified which is not part of the first set of training data and which, when input into the thus-far trained model, results in an inferred output having a relatively high uncertainty estimate. Accordingly, other control input may be identified for which the output is to be measured on the test bench. This may be particularly advantageous in applications where acquiring training data is time- and/or cost-intensive. For example, if the control input space is relatively large, e.g., by the computer-controlled entity having many operational parameters, it may be very time- and cost-intensive to acquire training data which covers all of the control input space. In such examples, active learning may be used to identify those parts of the control input space where the inference by the machine learned model is thus-far relatively uncertain, and thus where labeled input data may be especially valuable.

In an embodiment, the method of operating the test bench further comprises retraining the machine learnable model using the other control input and associated other observed output. Effectively, the other control input and the observed output may be used as additional training data to train the machine learnable model.

In an embodiment, a test bench system may be provided which comprises the training system and at least one sensor for measuring the observable output which results from the operation of the computer-controlled entity under control of the control input. In some embodiments, the test bench system may comprise an interface to the computer-controlled entity to be able to provide control input as test input to said entity.

It will be appreciated by those skilled in the art that two or more of the above-mentioned embodiments, implementations, and/or optional aspects of the invention may be combined in any way deemed useful.

Modifications and variations of any system, any computer-implemented method or any computer-readable medium, which correspond to the described modifications and variations of another one of said entities, can be carried out by a person skilled in the art on the basis of the present description.

**BRIEF DESCRIPTION OF THE DRAWINGS**

These and other aspects of the invention will be apparent from and elucidated further with reference to the embodiments described by way of example in the following description and with reference to the accompanying drawings, in which

Fig. 1 shows a system for training a Deep Gaussian Process, DGP, model to learn an unknown function $f$ which represents a relation between control input of a computer-controlled entity and observable output which results from an operation of the computer-controlled entity under control of the control input;
Fig. 2 shows a computer-implemented method for training a DGP model;
Fig. 3 shows covariance matrices for variational posteriors for a DGP model with two hidden layers L1, L2 for different Gaussian variational families, showing left: mean-field (MF), middle: stripes-and-arrow (STAR), right: fully-coupled (FC);
Fig. 4 shows a result of a calibration study;
Fig. 5 shows a runtime comparison, showing the runtime of one gradient step in seconds on a logarithmic scale as a function of the number of inducing points M, the number of layers L and the number $\tau$ of latent GPs per intermediate layer;
Fig. 6 shows the training system being used for operating a test bench for testing a computer-controlled entity by providing control input to the computer-controlled entity to control an operation of the computer-controlled entity;
Fig. 7 shows a method of operating a test bench; and

Fig. 8 shows a computer-readable medium comprising data.

It should be noted that the figures are purely diagrammatic and not drawn to scale. In the figures, elements which correspond to elements already described may have the same reference numerals.

**List of reference numbers and abbreviations**

The following list of reference numbers is provided for facilitating the interpretation of the drawings and shall not be construed as limiting the claims.

DGP     deep gaussian process
FC     fully connected
GP     gaussian process
LX     layer X
MF     mean-field
STAR     stripes and arrow
SGP     sparse variational GP

100     system for training DGP model
120     processor subsystem
140     data storage interface
150     data storage
152     training data
154     data representation of untrained DGP model
156     data representation of trained DGP
160     control interface
162     control input data
180     sensor interface
182     sensor data

200     method for training DGP model
210     accessing model data representing DGP model
220     accessing training data
230     training DGP model using training data
240     outer algorithmic loop to calculate evidence lower bound
250     middle algorithmic loop to sample multivariate Gaussian distribution
260     inner algorithmic loop to calculate covariance matrix

300     natural logarithm of absolute value of variational covariance matrices over inducing output

400     min. distance to training set
410     variance
412     variance
420     mean squared error
500     runtime of gradient step in seconds on logarithmic scale

600     computer-controlled entity
610     environment
620     sensor(s)

700     method of operating a test bench
710     providing control input to computer-controlled entity
720     observing output associated with computer-controlled entity
730     training DGP model on control input and observed output
740     identifying other control input to be tested

800     computer-readable medium
810     non-transitory data

**DETAILED DESCRIPTION OF EMBODIMENTS**

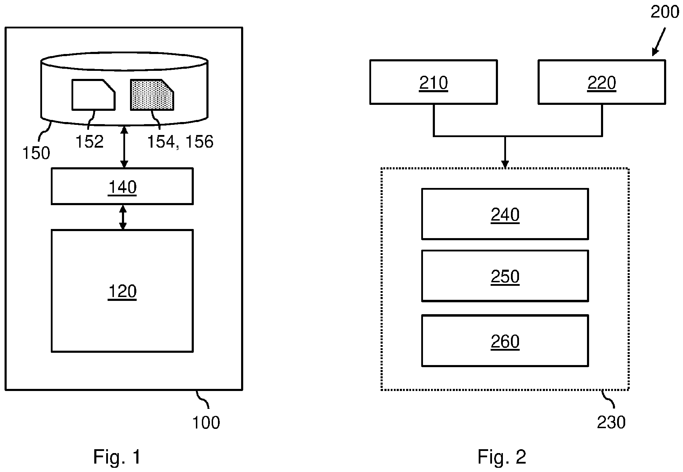

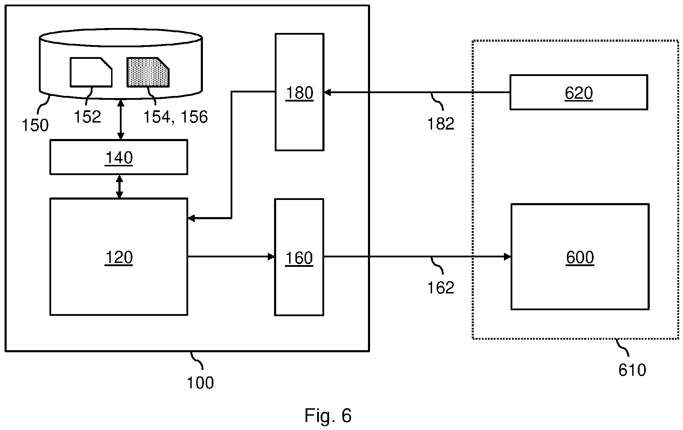

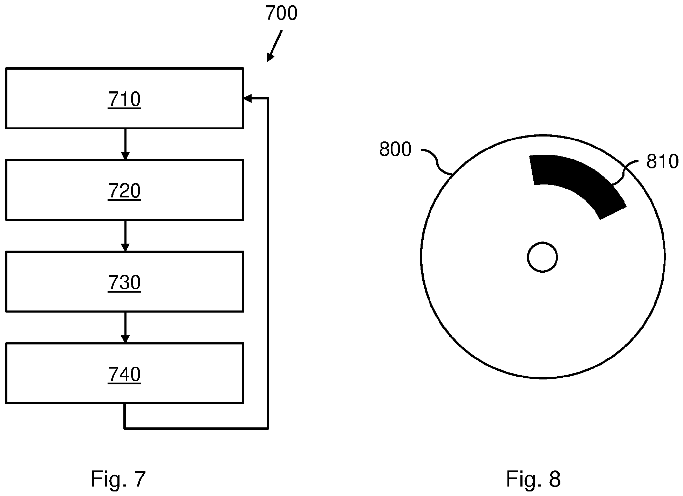

The following describes with reference to Figs. 1 and 2 a system and computer-implemented method for training a machine learnable model, and specifically a Deep Gaussian Process (DGP) model, to learn an unknown function $f$ which represents a relation between control input of a computer-controlled entity and observable output which results from an operation of the computer-controlled entity under control of the control input, then describes with reference to Figs. 3-5 the DGP model and its training in more detail, and with reference to Figs. 6 and 7 the use of the system and method to operate a test bench in which the computer-controlled entity is tested using test input. Finally, Fig. 8 shows a computer-readable medium used in some embodiments of the invention as claimed.

**Fig. 1** shows a system 100 for training a DGP model. The system 100 may comprise an input interface for accessing training data 152 for the DGP model. For example, as illustrated in Fig. 1, the input interface may be constituted by a data storage interface 140 which may access the training data 152 from a data storage 150. For example, the data storage interface 140 may be a memory interface or a persistent storage interface, e.g., a hard disk or an SSD interface, but also a personal, local or wide area network interface such as a Bluetooth, Zigbee or Wi-Fi interface or an ethernet or fiberoptic interface. The data storage 150 may be an internal data storage of the system 100, such as a memory, hard drive or SSD, but also an external data storage, e.g., a network-accessible data storage.

In some embodiments, the data storage 150 may further comprise a data representation 154 of an untrained version of the DGP model which may be accessed by the system 100 from the data storage 150. It will be appreciated, however, that the training data 152 and the data representation 154 of the untrained DGP model may also each be accessed from a different data storage, e.g., via a different subsystem of the data storage interface 140. Each subsystem may be of a type as is described above for the data storage interface 140. In other embodiments, the data representation 154 of the untrained DGP model may be internally generated by the system 100 on the basis of design parameters for the DGP model, and therefore may not explicitly be stored on the data storage 150.

The system 100 may further comprise a processor subsystem 120 which may be configured to, during operation of the system 100, train the DGP model using the training data 152 to learn the unknown function $f$ by learning a posterior probability distribution p over the unknown function $f$. The training by the processor subsystem 120 may comprise executing an algorithm which uses variational inference to approximate the posterior probability distribution $p$ by an approximated probability distribution $q$, with said approximating comprising maximizing an evidence lower bound $\mathcal{L}$ with respect to a set of parameters of the respective GPs to fit the DGP model to the training data 152. It is noted that the DGP model and its training will be further described with reference to Figs. 3-5.

The system 100 may further comprise an output interface for outputting a data representation 156 of the trained DGP model, this model also being referred to as a machine 'learned' model and the data also being referred to as trained model data 156. For example, as also illustrated in Fig. 1, the output interface may be constituted by the data storage interface 140, with said interface being in these embodiments an input/output ('IO') interface via which the trained model data 156 may be stored in the data storage 150. For example, the data representation 154 defining the 'untrained' DGP model may during or after the training be replaced, at least in part, by the data representation 156 of the trained DGP model, in that the parameters of the DGP model, such as hyper parameters and variational parameters and other types of parameters of DGP models or specifically of GPs, may be adapted to reflect the training on the training data 152. This is also illustrated in Fig. 1 by the reference numerals 154, 156 referring to the same data record on the data storage 150. In other embodiments, the data representation 156 of the trained DGP model may be stored separately from the data representation 154 defining the 'untrained' DGP model. In some embodiments, the output interface may be separate from the data storage interface 140, but may in general be of a type as described above for the data storage interface 140.

**Fig. 2** shows a computer-implemented method 200 for training a DGP model. The method 200 may correspond to an operation of the system 100 of Fig. 1, but does not need to, in that it may also correspond to an operation of another type of system, machine, apparatus, device or entity or in that it may correspond to steps of a computer program.

The method 200 is shown to comprise, in a step titled "ACCESSING MODEL DATA REPRESENTING DGP MODEL", accessing 210 model data representing the machine learnable model, wherein the machine learnable model is a Deep Gaussian Process, DGP, model, wherein the DGP model comprises a hierarchy of layers $L$ comprising at least one hidden layer and an output layer, wherein each layer of the hierarchy comprises a number of Gaussian Processes, GPs, and wherein the output layer additionally comprises a likelihood function. The method 200 is further shown to comprise, in a step titled "ACCESSING TRAINING DATA", accessing 220 training data comprising pairs of input points $x_N$ representing the control input and observed output points $y_N$ representing observed output. The method 200 is further shown to comprise, in a step titled "TRAINING DGP MODEL USING TRAINING DATA", training 230 the DGP model using the training data to learn the unknown function $f$ by learning a posterior probability distribution p over the unknown function $f$, wherein the training comprises executing an algorithm which uses variational inference to approximate the posterior probability distribution $p$ by an approximated probability distribution $q$, said approximating comprising maximizing an evidence lower bound $\mathcal{L}$ with respect to a set of parameters of the respective GPs so as to fit the DGP model to the training data. The algorithm may in general comprise calculating the evidence lower bound $\mathcal{L}$ based on sampled layer outputs $f_n$ of respective layers of the DGP model, wherein a layer output at a respective layer is defined by the algorithm to be distributed according to a multivariate Gaussian distribution, and wherein calculating the sampled layer outputs $f_n$ comprises, for each layer, calculating a mean $\mu_n$ and a covariance $\Sigma_n$ of the multivariate Gaussian distribution by i) calculating respective base values for the mean $\mu_n$ and the covariance $\Sigma_n$ by a mean-field approximation which assumes independence between GPs, ii) for each GP in each hidden layer except for a first hidden layer, applying a correction term to the respective base values which establishes a selective coupling to GPs at a same position in previous hidden layers, and for each GP in the output layer, applying a correction term to the respective base values which establishes a selective coupling to GPs at each position in each previous hidden layer; and iii) obtaining the sampled layer outputs $f_n$ by sampling the multivariate Gaussian distribution as parameterized by the mean $\mu_n$ and the covariance $\Sigma_n$. In a specific example, the algorithm may comprise a number of nested algorithmic loops, such as an outer loop 240, a middle loop 250 and an inner loop 260. These nested algorithmic loops may correspond to algorithm 1, 2 and 4 as described elsewhere in this specification for respectively the outer 240, middle 250 and inner loop 260. In an alternative embodiment, the nested algorithmic loops may correspond to respective algorithms 1, 2 and 3 as described elsewhere.

The following examples describe the DGP model, including the training thereof, in more detail. However, the actual implementation of the DGP model and its training may be carried out in various other ways, e.g., on the basis of analogous mathematical concepts. Various other embodiments are within reach of the skilled person based on this specification.

### Introduction

Deep Gaussian Processes may learn probabilistic data representations for supervised learning by cascading multiple Gaussian Processes. While such DGP models promise flexible predictive distributions, exact inference is not tractable. Approximate inference techniques may provide a trade-off between the ability to closely resemble the posterior distribution against speed of convergence and computational efficiency. The following describes a Gaussian variational family that allows for retaining covariances between latent processes while achieving fast convergence by marginalizing out all global latent variables. In particular, the Gaussian variational family may take the following two requirements into account: (i) all global latent variables, e.g., inducing outputs $f_M$, can be marginalized out, and (ii) correlations between latent GP models can be captured. Satisfying (i) may reduce the variance in the estimators and may be needed for fast convergence, while satisfying (ii) may lead to better calibrated uncertainty estimates. By using a fully-parameterized Gaussian variational posterior over the global latent variables, one may automatically fulfil ii), while it is shown elsewhere in this specification, via a proof by induction, that i) can still be achieved. The proof is constructive and results in an inference scheme for variational families that allows for correlations within and across layers.

Fig. 3 shows on the right-hand side ('FC') exemplary inferred covariances between the latent GP models, with the greyscale coding 300 showing a natural logarithm of absolute value of variational covariance matrices over inducing output. It can be seen that in addition to the diagonal blocks, the covariance matrix has visible diagonal stripes in the off-diagonal blocks and an arrow structure. These diagonal stripes point towards strong dependencies between successive latent GPs, while the arrow structure reflects dependencies between the output layer and all hidden layers. In the following, a scalable approximation is proposed to this fully-coupled ('FC') variational family, which only takes these stronger correlations into account (Fig. 3, middle, 'STAR'). An efficient implementation is described for both variational families, where in particular the sparsity and structure of the covariance matrix of the variational posterior is exploited for this efficient implementation.

It is confirmed experimentally that the described algorithm works well in practice, yielding accurate predictions and calibrated uncertainty estimates. The benefits of the variational families are most prominent when the test points are distant from the training points as the algorithm assigns larger and thereby more accurate uncertainties to distant test points. This addresses there being an urgent need for calibrated uncertainties for distant test point for safe AI applications. Their occurrence can be a consequence of scarce training data, which is the underlying problem for Bayesian optimization and safe active learning, or unforeseen shifts in the data distributions that happen in many real-world applications.

### Background

The following introduces various notations and provides background information on DGP models, starting with Sparse GPs as the building blocks of DGP models.

**Sparse Gaussian Processes**

In regression problems, the task may be formulated as having to learn a function $f: \mathbb{R}^D \to \mathbb{R}$ that maps a set of $N$ input points $x_N = \{x_n\}_{n=1}^N$ to a corresponding set of noisy outputs $y_N = \{y_n\}_{n=1}^N$. Throughout this specification, independent differently distributed (i.d.d. or simply 'idd') noise is assumed, $p(y_N|f_N) = \prod_{n=1}^N p(y_n|f_n)$, where $f_n$ = $f(x_n)$ and $f_N = \{f_n\}_{n=1}^N$ are the function values at the input points. A zero mean GP prior may be placed on the function $f$, $f \sim \mathcal{GP}(0, k)$, where $k: \mathbb{R}^D \times \mathbb{R}^D \to \mathbb{R}$ is the kernel function. This assumption leads to a multivariate Gaussian prior over the function values, $p(f_N) =$

$$\mathcal{N}(f_N|0, K_{NN})$$

with covariance matrix $K_{NN} = \{k(x_n, x_{n\prime})\}_{n,n\prime=1}^N$.

In case of Gaussian likelihood, exact inference in this model is possible but incurs $\mathcal{O}(N^3)$ computational costs. Using sparse GPs, this limitation can be overcome, see, e.g., reference [1]: for this method a set of $M << N$ so-called inducing points $x_M = \{x_m\}_{m=1}^M$ $x_M$ from the input space is introduced. From the definition of a GP, the corresponding inducing outputs $f_M = \{f_m\}_{m=1}^M$, $f_M$ where $f_m = f(x_m)$, share a joint multivariate Gaussian distribution with $f_N$. The joint density of the model may therefore be written as:

$$p(y_N, f_N, f_M) = p(f_N|f_M)p(f_M)\prod_{n=1}^N p(y_n|f_n), \qquad (1)$$

where the joint prior may be factorized into

$$p(f_M) = \mathcal{N}(f_M|0, K_{MM}),$$

the prior over the inducing outputs, and the conditional

$$p(f_N|f_M) = \mathcal{N}\left(f_N|\widetilde{K}_{NM}f_M, \widetilde{K}_{NN}\right)$$

with

$$\widetilde{K}_{NM} = K_{NM}(K_{MM})^{-1}, \qquad (2)$$

$$\widetilde{K}_{NN} = K_{NN} - K_{NM}(K_{MM})^{-1}K_{MN}. \qquad (3)$$

Here, the matrices $K$ are defined similarly as $K_{NN}$ above, e.g., $K_{NM} = \{k(x_n, x_m)\}_{n,m=1}^{N,M}$. Note that in the notation, variables with an index $m$, $M$ ($n$, $N$) denote quantities related to inducing (training) points. This implies for example that $x_{m=1}$ and $x_{n=1}$ are in general not the same.

Scalable inference in this model [Eq. (1)] can be achieved by employing variational inference (VI): one may search for an approximation $q(f_N, f_M)$ to the true posterior $p(f_N, f_M|y_N)$ by first choosing a variational family for the distribution $q$ and then finding an optimal $q$ that minimizes the Kullback-Leibler (KL) divergence KL[$q\|p$], Equivalently, the so-called evidence lower bound (ELBO),

$$\mathcal{L} = \int q(f_N, f_M) \log \frac{p(y_N, f_N, f_M)}{q(f_N, f_M)} \, df_N \, df_M, \tag{4}$$

can be maximized. The conventional variational family may be:

$$q(f_N, f_M) = p(f_N | f_M) q(f_M), \tag{5}$$

where

$$q(f_M) = \mathcal{N}(f_M | \mu_M, S_M),$$

and the mean $\mu_M$ and the covariance $S_M$ may be free variational parameters. The inducing outputs $f_M$ may act thereby as global latent variables that capture the information of the training data. Plugging (5) into (4), yields an ELBO of the form of:

$$\mathcal{L} = \sum_{n=1}^{N} \mathbb{E}_{q(f_n)}[\log p(y_n | f_n)] - \mathrm{KL}[q(f_M) || p(f_M)], \tag{6}$$

where the $q(f_n)$ are the marginals of $q(f_N)$. The latter distribution may be obtained by analytically marginalizing out the inducing outputs $f_M$ from the approximate posterior $q(f_N, f_M)$, resulting in

$$q(f_N) = \mathcal{N}(f_N | \tilde{\mu}_N, \tilde{\Sigma}_N),$$

where:

$$\tilde{\mu}_N = \tilde{K}_{NM} \mu_M, \tag{7}$$

$$\tilde{\Sigma}_N = K_{NN} - \tilde{K}_{NM}(K_{MM} - S_M)\tilde{K}_{NM}^{\mathsf{T}}. \tag{8}$$

Variational parameters $(\mu_M, S_M)$, model hyperparameters and the location of the inducing points $x_M$ may be obtained by maximizing the ELBO (6). Since the latter decomposes over the data points, so-called minibatch subsampling may be applied.

**Deep Gaussian Processes**

A deep Gaussian Process (DGP) is a hierarchical composition of GP models. The following considers a model with $L$ layers and $T_l$ (stochastic) functions in layer $l = 1, ..., L$, i.e., a total number of $T = \sum_{l=1}^{L} T_l$ functions. The input of layer $l$ may be the output of the previous layer, $f_N^l = [f^{l,1}(f_N^{l-1}), ..., f^{l,T_l}(f_N^{l-1})]$, with starting values $f_N^0 = x_N$. Independent GP priors augmented with inducing points may be placed on all the functions, using the same kernel $k^l$ and the same set of inducing points $x_M^l$ within layer $l$. This leads to the following joint model density:

$$p(y_N, f_N, f_M) = p(y_N | f_N^L) \prod_{l=1}^{L} p(f_N^l | f_M^l; f_N^{l-1}) p(f_M^l). \tag{9}$$

Here

$$p(f_M^l) = \prod_{t=1}^{T_l} \mathcal{N}(f_M^{l,t}|0, K_{MM}^l) \text{ and } p(f_N^l|f_M^l; f_N^{l-1}) =$$

$$\prod_{t=1}^{T_l} \mathcal{N}(f_N^{l,t}|\widetilde{K}_{NM}^l f_M^{l,t}, \widetilde{K}_{NN}^l),$$

where $\widetilde{K}_{NM}^l$ and $\widetilde{K}_{NN}^l$ are given by the equivalents of Eqs. (2) and (3), respectively.

Inference in this model (9) may be intractable since one cannot marginalize over the latents $f_N^1, \ldots, f_N^{L-1}$ as they act as inputs to the non-linear kernel function. Therefore, one may choose to approximate the posterior by VI using the following variational family:

$$q(f_N, f_M) = q(f_M) \prod_{l=1}^{L} p(f_N^l|f_M^l; f_N^{l-1}). \tag{10}$$

Note that $f_M = \{f_M^{l,t}\}_{l,t=1}^{L,T_l}$ contains the inducing outputs of all layers and might be covarying. This observation will be the starting point for the structured approximation as described under the heading Structured Deep Gaussian Processes'.

A second restriction may be added to the variational family by assuming that the inducing outputs are a-posteriori independent between different GPs (known as mean-field assumption (see also Fig. 3, left, for a visual representation):

$$q(f_M) = \prod_{l=1}^{L} \prod_{t=1}^{T_l} q(f_M^{l,t}), \tag{11}$$

where

$$q(f_M^{l,t}) = \mathcal{N}(f_M^{l,t}|\mu_M^{l,t}, S_M^{l,t})$$

and $\mu_M^{l,t}$, $S_M^{l,t}$ are free variational parameters. Plugging Eqs. (9) - (11) in Eq. (4), one may simplify the ELBO to:

$$\mathcal{L} = \sum_{n=1}^{N} \mathbb{E}_{q(f_n^L)}[\log p(y_n|f_n^L)] - \sum_{l,t=1}^{L,T_l} \text{KL}[q(f_M^{l,t})||p(f_M^{l,t})]. \tag{12}$$

It is noted that this formula looks remarkably similar to the sparse GP case of Eq. (6). However, there is a subtle difference, namely that the marginals of the output of the last layer $q(f_n^L)$ cannot be obtained analytically. While the mean-field assumption renders it easy to analytically marginalize out the inducing outputs, the outputs of the intermediate layers may not be fully integrated out, since they are kernel inputs of the respective next layer, leaving one with

$$q(f_n^L) = \int \prod_{l=1}^{L} q(f_n^l; f_n^{l-1}) df_n^1 \cdots df_n^{L-1}. \tag{13}$$

The terms appearing in Eq. (13) are all Gaussians,

$$q(f_n^l; f_n^{l-1}) = \prod_{t=1}^{T_l} \mathcal{N}(f_n^{l,t}|\tilde{\mu}_n^{l,t}, \tilde{\Sigma}_n^{l,t}), \tag{14}$$

where the means and covariances are given by the equivalents of Eqs. (7) and (8) (with $K^{l,t} = K^l \ \forall t$). One may therefore obtain samples from $q(f_n^L)$ by recursively sampling through the layers using Eq. (14). Those samples may be used to evaluate the ELBO [Eq. (12)] and one can additionally use a known reparameterization technique to obtain unbiased gradients for parameter optimization. This stochastic estimator of the ELBO has low variance as one only needs to sample over the local latent parameters $f_n^1, ..., f_n^{L-1}$, while one can marginalize out the global latent parameters, e.g., the inducing outputs, $f_M$.

Finally, predictions may be made by taking multiple samples from $q(f_*^L)$ using Eq. (13), where the training input is being replaced by the test input x∗. The resulting predictive distribution is a mixture of Gaussians that can in principle approximate arbitrarily complex distributions.

**Structured Deep Gaussian Processes**

The following introduces a class of variational families that allows to couple the inducing outputs $f_M$ within and across layers. Surprisingly, analytical marginalization over the inducing outputs $f_M$ is still possible, enabling an efficient inference scheme that refrains from sampling any global latent variables. Further speed-ups can be attained by focusing on the most prominent interactions, as shown under Stripes-and-Arrow approximation'.

**Fully-Coupled DGPs**

The following presents a variational family that strikes a good balance between efficient computations and expressivity: this variational family is efficient, since all global latent variables can be marginalized out, and expressive, since it allows for structure in the variational posterior. This may leave the Gaussianity assumption made in Eq. (11) unchanged, while dependencies between all inducing outputs (within layers and also across layers) may be introduced. This may lead to:

$$q(f_M) = \mathcal{N}(f_M | \mu_M, S_M). \tag{15}$$

with dimensionality *TM*. In contrast to Eq. (11), this variational family takes the dependencies between the latent processes into account, which makes the resulting variational posterior $q(f_N, f_M)$ in Eq. (10) better suited to closely approximate the true posterior. A comparison of exemplary covariance matrices $S_M$ is given in Fig. 3.

Next, it is investigated how the ELBO computations have to be adjusted when using the fully-coupled variational family. Plugging Eq. (15) into Eqs. (4), (9), (10), yields

$$\mathcal{L} = \sum_{n=1}^N \mathbb{E}_{q(f_n^L)}[\log p(y_n | f_n^L)] - \text{KL}[q(f_M) || \prod_{l=1}^L p(f_M^l)]. \tag{16}$$

A major difference to the mean-field DGP lies in the marginals $q(f_n^L)$ of the outputs of the last layer. While the inducing outputs $f_M$ could be rather straightforwardly marginalized out in the mean-field DGP, this is no longer the case for the fully-coupled DGP.

The findings about the implications of using a fully coupled $q(f_M)$ [Eq. (15)] are summarized in the following theorem:

Theorem 1: *In a fully-coupled DGP as defined above, for each data point $x_n$, the marginals $q(f_n^L)$ can be written as*

$$q(f_n^L) = \int \prod_{l=1}^L q(f_n^l | f_n^1, ..., f_n^{l-1}) df_n^1 \cdots df_n^{L-1}, \tag{17}$$

where all the distributions are conditionally Gaussian. They have the form

$$q\big(f_n^l | f_n^1, \dots, f_n^{l-1}\big) = \mathcal{N}\big(f_n^l | \hat{\mu}_n^l, \hat{\Sigma}_n^l\big), \tag{18}$$

where the means and covariances are given by

$$\hat{\mu}_n^l = \tilde{\mu}_n^l + \tilde{S}_n^{l,1:l-1}\big(\tilde{S}_n^{1:l-1,1:l-1}\big)^{-1}\big(f_n^{1:l-1} - \tilde{\mu}_n^{1:l-1}\big), \tag{19}$$

$$\hat{\Sigma}_n^l = \tilde{S}_n^{ll} - \tilde{S}_n^{l,1:l-1}\big(\tilde{S}_n^{1:l-1,1:l-1}\big)^{-1}\tilde{S}_n^{1:l-1,l}, \tag{20}$$

and $\tilde{\mu}_n^l$ and $\tilde{S}_n^{ll'}$ are defined as

$$\tilde{\mu}_n^l = \tilde{\mathcal{K}}_{nM}^l \mu_M^l, \tag{21}$$

$$\tilde{S}_n^{ll'} = \delta_{ll'}\mathcal{K}_{nn}^l - \tilde{\mathcal{K}}_{nM}^l\big(\delta_{ll'}\mathcal{K}_{MM}^l - S_M^{ll'}\big)\tilde{\mathcal{K}}_{Mn}^{l'}. \tag{22}$$

In Eqs. (19) and (20) the notation $A^{l,1:l'}$ is used to index a submatrix of the variable $A$, e.g. $A^{l,1:l'} = (A^{l,1} \cdots A^{l,l'})$. Additionally, $\mu_M^l \in \mathbb{R}^{T_l M}$ denotes the subvector of $\mu_M$ that contains the means of the inducing outputs in layer $l$, and $S_M^{ll'} \in \mathbb{R}^{T_l M \times T_{l'} M}$ contains the covariances between the inducing outputs of layers $l$ and $l'$. For Eqs. (21) and (22), the notation

$$\mathcal{K}^l = \big(\mathbb{I}_{T_l} \otimes K^l\big)$$

is introduced as shorthand for the Kronecker product between the identity matrix $\mathbb{I}_{T_l}$ and the covariance matrix $K^l$, and used $\delta$ for the Kronecker delta.

Before proceeding to provide a sketch of the proof of Thm. 1, it will first be verified that Eq. (18) reduces to Eq. (14) when one plugs in the mean-field posterior (11) in the above formulas: in the notation of Eq. (15) this means restricting the covariance matrix to $S_M = \mathrm{diag}(\{S_M^{ll}\}_{l=1}^L)$, where $S_M^{ll} = \mathrm{diag}(\{S_M^{l,t}\}_{t=1}^{T_l})$ (see also Fig. 3, left).

Removing the correlations between the layers by setting $S_M = \mathrm{diag}(\{S_M^{ll}\}_{l=1}^L)$, also implies that $\tilde{S}_n^{ll'} = 0$ if $l \neq l'$ [Eq. (22)]. Therefore Eqs. (19) and (20) reduce to $\hat{\mu}_n^l = \tilde{\mu}_n^l$ and $\hat{\Sigma}_n^l = \tilde{S}_n^{ll}$. The resulting variational posterior factorises between the layers with

$$q\big(f_n^l; f_n^{l-1}\big) = \mathcal{N}\big(f_n^l | \tilde{\mu}_n^l, \tilde{S}_n^{ll}\big).$$

Removing the correlations within one layer by setting $S_M^{ll} = \mathrm{diag}(\{S_M^{l,t}\}_{t=1}^{T_l})$ renders the covariance matrix $\tilde{S}_n^{ll}$ block-diagonal. The diagonal blocks are obtained by evaluating Eq. (22) with $S_M^{ll} = \mathrm{diag}(\{S_M^{l,t}\}_{t=1}^{T_l})$. It is easy to see that these diagonal blocks are equal to $\tilde{\Sigma}_n^{l,t}$ and one recovers the mean-field solution [Eq. (14)].

By Thm. 1, the inducing outputs $f_M$ can still be marginalized out, which enables low-variance estimators of the ELBO. While the resulting formula for $q(f_n^l | f_n^1, \ldots, f_n^{l-1})$ has a similar form as Gaussian conditionals, this is only true at first glance: The latents of the preceding layers $f_n^{1:l-1}$ enter the mean $\hat{\mu}_n^l$ and the covariance matrix $\hat{\Sigma}_n^l$ also in an indirect way over $\tilde{S}_n$ as they appear as inputs to the kernel matrices in Eq. (22).

*Sketch of the proof of Theorem 1.* The proof may begin with the general formula for $q(f_n^L)$,

$$\int \left[ \int q(f_M) \prod_{l'=1}^{L} p(f_n^{l'} | f_M^{l'}) df_M \right] df_n^1 \cdots df_n^{L-1}. \tag{23}$$

In order to show the equivalence between the inner integral in Eq. (23) and the integrand in Eq. (17) it is proceeded to find a recursive formula for integrating out the inducing outputs layer after layer

$$\int q(f_M) \prod_{l'=1}^{L} p(f_n^{l'} | f_M^{l'}) df_M = \left[ \prod_{l'=1}^{l-1} q(f_n^{l'} | f_n^{1:l'-1}) \right] \times$$
$$\int q(f_n^l, f_M^{l+1:L} | f_n^{1:l-1}) \prod_{l'=l+1}^{L} p(f_n^{l'} | f_M^{l'}) df_M^{l'}. \tag{24}$$

The equation above holds for *l* = 1, ..., *L* after the inducing outputs of layers 1, ..., *l* have already been marginalized out. Importantly, all of the inducing outputs are multivariate Gaussians with known mean and covariance.

The following shows the general idea of the induction step. For this, it is assumed for the right hand side of Eq. (24) to hold for some layer *l* and then it proven that it also holds for *l* → *l* + 1. One may start by taking the (known) distribution within the integral and split it in two by conditioning on $f_n^l$:

$$q(f_n^l, f_M^{l+1:L} | f_n^{1:l-1}) = q(f_n^l | f_n^{1:l-1}) red q(f_M^{l+1:L} | f_n^{1:l}). \tag{25}$$

Then it is shown that the distribution $q(f_n^l | f_n^{1:l-1})$ can be written as part of the product in front of the integral in Eq. (24) (thereby increasing the upper limit of the product to *l*). Next, one may consider the integration over $f_M^{l+1}$, where one may collect all relevant terms (thereby increasing the lower limit of the product within the integral to *l* + 2):

$$\int q(f_M^{l+1:L} | f_n^{1:l}) p(f_n^{l+1} | f_M^{l+1}) df_M^{l+1}$$
$$= \int q(f_M^{l+1} | f_n^{1:l}) q(f_M^{l+2:L} | f_n^{1:l}, f_M^{l+1}) p(f_n^{l+1} | f_M^{l+1}) df_M^{l+1}$$
$$= \int q(f_M^{l+1} | f_n^{1:l}) q(f_n^{l+1}, f_M^{l+2:L} | f_n^{1:l}, f_M^{l+1}) df_M^{l+1}$$
$$= \int q(f_n^{l+1}, f_M^{l+2:L} | f_n^{1:l}) \tag{26}$$

The terms in the first line are given by Eqs. (25) and (9). All subsequent terms are also multivariate Gaussians that are obtained by standard operations like conditioning, joining two distributions, and marginalization. One may therefore give an analytical expression of the term in Eq. (26), which is exactly the term that is needed on the right hand side of Eq. (24) for *l* → *l* + 1. Confirming that this term has the correct mean and covariance completes the induction step.

With reference to Eq. (24), for the case *l* = *L* the right-hand side can be shown to yield $\prod_{l=1}^{L} q(f_n^l | f_n^1, \ldots, f_n^{l-1})$. Hence, Eq. (17) follows by substituting the inner integral in Eq. (23) by this term.

The following summarizes the above by showing a resulting algorithm for calculating the ELBO (16) in Algorithms 1, 2, and 3. Alg. 1 shows how the ELBO can be calculated, where one may average over multiple samples to reduce noise obtained by sampling through the layers. Alg. 2 zooms into a single layer of the DGP and differentiates the mean-field approach and the approach described in this specification: All coupled DGP approaches compute additional blocks of the covariance matrix $\tilde{S}_n$ (marked in **bold** in Alg. 3) that lead to a dependency of the output of the current layer $f_n^l$

on its predecessors $f_n^{1:l-1}$. (marked in **bold** in Alg. 2).

---

**Algorithm 1** ELBO for coupled DGP

---

given minibatch $x_{N_b}$, $y_{N_b}$ of size $N_b$, and

number of Monte Carlo repetitions $R$

$\mathcal{L} = 0$

for $n = 1 \dots N_b$ do

    list $= [x_n]$                           $\triangleright$   accumulates $\widetilde{\mathcal{K}}_{nM}^l, \tilde{\mu}_n^l, \tilde{S}_n^{1:l,1:l}, f_n^l$

    for $r = 1 \dots R$ do

        for $l = 1 \dots L$ do                              $\triangleright$ Alg. 2

            $\hat{\mu}_n^l, \hat{\Sigma}_n^l,$ list $=$ sample_layer($l$, list)

            $\mathcal{L} += \frac{N}{N_b S}$ var_log_likelihood($y_n, \hat{\mu}_n^L, \hat{\Sigma}_n^L$)

$\mathcal{L} -=$ KL_term()

return $\mathcal{L}$                                  $\triangleright$   ELBO from Eq. (16)

---

**Algorithm 2** sample_layer($l$, list): Return $\hat{\mu}_n^l, \hat{\Sigma}_n^l$ and sample $f_n^l$, update relevant quantities for later layers.

---

    $\triangleright$   list contains $\widetilde{\mathcal{K}}_{nM}^{1:l-1}, \tilde{\mu}_n^{1:l-1}, \tilde{S}_n^{1:l-1,1:l-1}, f_n^{1:l-1}$

$\tilde{\mu}_n^l =$ get_mu_tilde()                            $\triangleright$   Eq. (21)

$\tilde{S}_n^{l,1:l} =$ get_S_tilde($l, \widetilde{\mathcal{K}}_{nM}^{1:l}$)                $\triangleright$   Alg. 3

$\hat{\mu}_n^l = \tilde{\mu}_n^l +$ **correct_mu**(list, $\tilde{\mathbf{S}}_{\mathbf{n}}^{l,1:l-1}$)       $\triangleright$   Eq. (19)

$\hat{\Sigma}_n^l = \tilde{S}_n^{ll} -$ **correct_Sigma**(list, $\tilde{S}_n^{l,1:l-1}$)     $\triangleright$   Eq. (20)

$f_n^l =$ sample_multivariate_gauss($\hat{\mu}_n^l, \hat{\Sigma}_n^l$)

list $=$ append(list, $\widetilde{\mathcal{K}}_{nM}^l, \tilde{\mu}_n^l, \tilde{S}_n^{l,1:l-1}, \tilde{S}_n^{ll}, f_n^l$)

return $\hat{\mu}_n^l, \hat{\Sigma}_n^l,$ list                        $\triangleright$   Return to Alg. 1

---

**Algorithm 3** get_S_tilde($l, \widetilde{\mathcal{K}}_{nM}^{1:l}$): Calculate $\tilde{S}_n^{l,1:l-1}$ and $\tilde{S}_n^{l,l}$ according to Eq. (22) for the fully-coupled DGP.

---

$(S_M^{ll'})_{tt'}$ denotes the $M \times M$ block in $S_M$ that contains the covariances of the inducing outputs of the $t$-th GP in the $l$-th layer and the $t'$-th GP in the $l'$-th layer. Analogously for $(\tilde{S}_n^{ll'})_{tt'}$.

for $l' = 1 \dots l$ do

    for $t, t' = 1 \dots T_l, 1 \dots T_{l'}$ do

        if $l = l'$ and $t = t'$ then

$$(\tilde{S}_n^{l,l})_{tt} = \tilde{K}_{nM}^l \left( (S_M^{ll})_{tt} - K_{MM}^l \right) \tilde{K}_{Mn}^l$$

$$(\tilde{S}_n^{l,l})_{tt} \mathrel{+}= K_{nn}^l$$

        **else**

$$(\tilde{S}_n^{l,l'})_{tt'} = \tilde{K}_{nM}^l (S_M^{ll'})_{tt'} \tilde{K}_{Mn}^{l'}$$

return $\tilde{S}_n^{l,1:l}$              ▷   Return to Alg. 2

The above variational approach was used to fit a fully coupled DGP model with $L = 3$ layers to the *'concrete'* UCI dataset. It can clearly be observed that this algorithmic work pays off: Fig. 3 shows that there is more structure (right) in the covariance matrix $S_M$ than the mean-field approximation (left) allows. This is also reflected on the ELBO values for which larger values were observed for the fully-coupled DGP compared to the mean-field DGP (ELBO$_{FC}$ = -359 vs. ELBO$_{MF}$ = -414).

However, the increase in the number of variational parameters also leads to an increase in runtime and may make convergence with standard optimizers fragile due to many local optima. While the latter may be circumvented by the use of natural gradients, which have been found to work well for (D)GP models before, the increased runtime (see section 'Runtime') persists. It is therefore advantageous to find a smaller variational family for use in large-scale machine learning applications.

An optimal variational family combines the best of both worlds, e.g., being as efficient as the mean-field DGP while retaining the most important interactions introduced in the fully-coupled DGP. There are many possible ways of restricting the covariance matrix $S_M$ that potentially lead to different benefits in different experimental settings. Through the general framework that is developed, testing them is straightforward and can be done via simply implementing a naive version of the covariance matrix in the algorithmic code.

**Stripes-and-Arrow Approximation**

In this section, a variational family is described that balances efficiency and expressivity by sparsifying the covariance matrix $S_M$. Inspecting Fig. 3 (right) again, one may observe that besides the $M \times M$ blocks on the diagonal, the diagonal stripes (covariances between the GPs in latent layers at the same relative position), and an arrow structure (covariances from every intermediate layer GP to the output GP) receive large values. One may thus keep only these terms and neglect all other dependencies by setting them to zero in the covariance matrix, resulting in a structure consisting of an arrowhead and diagonal stripes (see Fig. 3 middle). Note that this structure can (only) be employed if the same number of GPs in all the latent layers is used. But since this is the case for almost all reported results using DGPs, it is not considered to be a major restriction.

Denoting the number of GPs per latent layer as $\tau$, it is straightforward to show that the number of non-zero elements in the covariance matrices of mean-field DGP, stripes-and-arrow DGP, and fully-coupled DGP scale as $\mathcal{O}(\tau L M^2)$, $\mathcal{O}(\tau L^2 M^2)$, and $\mathcal{O}(\tau^2 L^2 M^2)$, respectively. In the example of Fig. 3, the following parameters were used: $\tau = 5$, $L = 3$, and $M = 128$, yielding $1.8 \times 10^5$, $5.1 \times 10^5$, and $2.0 \times 10^6$ non-zero elements in the covariance matrices. While reducing the number of parameters already leads to shorter training times since less gradients need to be computed, one may furthermore exploit the structure of the covariance matrix for efficient computations.

A property that makes this form so compelling is that the covariance matrix $\tilde{S}_n^{1:l-1,1:l-1}$ [needed in Eqs. (19) and (20)] as well as the Cholesky decomposition of $S_M$ have the same sparsity pattern. In this respect, it is noted that in order to ensure that $S_M$ is positive definite, one may numerically only work with its Cholesky factor $L$, being a unique lower triangular matrix such that $S_M = LL^{\mathsf{T}}$. Given the above, only the non-zero elements at pre-defined positions have to be calculated. This is also shown in Alg. 4, where elements of $\tilde{S}_n^{l,1:l}$, that still need to be calculated, are marked in **bold**. The nested algorithmic loops as described elsewhere may thus be given by the combination of algorithms 1, 2 and 4.

---

**Algorithm 4** get_S_tilde($l, \widetilde{\mathcal{K}}_{nM}^{1:l}$): Calculate $\tilde{S}_n^{l,1:l-1}$ and $\tilde{S}_n^{l,l}$ for the stripes-and-arrow DGP.

---

for $l' = 1 \dots l$ do

    for $t, t' = 1 \dots T_l, 1 \dots T_{l'}$ do

        if $l = l'$ and $t = t'$ then

$$(\tilde{S}_n^{l,l})_{tt} = \widetilde{K}_{nM}^l\big((S_M^{ll})_{tt} - K_{MM}^l\big)\widetilde{K}_{Mn}^l$$

$$(\tilde{S}_n^{l,l})_{tt} += K_{nn}^l$$

        **else if $l = L$ or $t = t'$ then**

$$(\tilde{S}_n^{l,l'})_{tt'} = \widetilde{K}_{nM}^l(S_M^{ll'})_{tt'}\widetilde{K}_{Mn}^{l'}$$

return $\tilde{S}_n^{l,1:l}$                                   $\triangleright$ Return to Alg. 2

---

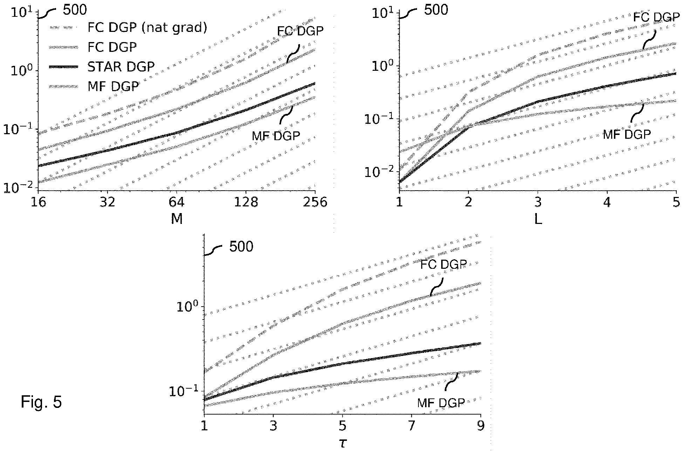

The complexity for the ELBO is $\mathcal{C}$ ($NM^2\tau L^2 + N\tau^3L^3 + M^3\tau L^3$). This is a moderate increase compared to the mean-field DGP whose ELBO has complexity $\mathcal{C}$ ($NM^2\tau L$), while it is a clear improvement over the fully-coupled approach whose ELBO has complexity $\mathcal{C}$ ($NM^2\tau^2L^2 + N\tau^3L^3 + M^3\tau^3L^3$). An empirical runtime comparison is provided with reference to Fig. 5 and under the heading 'Runtime'. As optimizers, standard optimizers may be used, as known in the art of machine learning, such as the 'Adam' optimizer.

### Joint sampling of global and local latent variables

It is known to drop the Gaussian assumption over the inducing outputs $f_M$ and allow instead for potentially multi-modal approximate posteriors. While such approaches are arguably more expressive than the one described in this specification, this flexibility comes at a price: the distribution over the inducing outputs $f_M$ is only given implicitly in form of Monte Carlo samples. Since the inducing outputs $f_M$ act as global latent parameters, the noise attached to their sampling-based estimates affects all samples from one mini-batch. This can often lead to higher variances which may translate to slower convergence.

### Experiments

For interpolation tasks, it was found that the stripes-and-arrow approximation performed on par with state-of-the-art approaches. However, when additionally considering an extrapolation setting, where the test points are distant from the training points, the stripes-and-arrow approximation outperforms its competitors due to better calibrated uncertainty estimates. In addition to a benchmarking, the following also assesses the runtime of the stripes-and-arrow approximation and empirically confirm that it has only a negligible overhead over the mean-field approach and is more efficient than a fully-coupled DGP.

### Benchmark Results

The predictive performance of the efficient stripes-and-arrow approximation (STAR DGP) was compared with a mean-field approximation (MF DGP) [2] and a sparse variational GP (SGP). As done in prior work, results are reported on a collection of eight UCI benchmark datasets, while as evaluation criterion, the average test log-likelihood was used.

In initial experiments, an overfitting for the variational methods was experienced. To prevent this from happening, 10% of the training data was used as a validation set. Early-stopping was performed if the performance on the validation set decreased in five successive strips. A hold-out dataset was neither used for the GP methods, as they have a much smaller number of hyperparameters, nor for the Hamiltonian Monte Carlo approaches, as the correlation between adjacent samples complicates defining a good early-stopping criterion. Apart from that, same model architectures, hyperparameter initializations and optimization settings were used across all methods and all datasets.

The interpolation behavior of the different approaches was assessed by randomly partitioning the data into a training and a test set with a 90-10 split. To investigate the extrapolation behavior, test instances were created that are distant from the training samples: first, the inputs were randomly projected onto a one-dimensional subspace $z = Xw$, where the weights $w \in \mathbb{R}^D$ were drawn from a standard Gaussian distribution. The samples were subsequently ordered w.r.t. $z$ and divided into training and test set using a 50:50 split.

As is known per se from literature, e.g., from [2], it was confirmed that DGPs have an improved performance on interpolation tasks compared to sparse GPs. However, the stripes-and-arrow approximation was the only one that performed superior in a combined evaluation of the interpolation and the extrapolation scenarios, as shown below:

Table 1: Extrapolation behavior on UCI benchmark datasets. Test log-likelihoods (the larger, the better) are shown for various methods and various number of layers $L$ in the extrapolation setting. All methods marked in bold performed better or as good as SGP in the interpolation and extrapolation scenario. Additionally underlined are those that are significantly better (non-overlapping confidence intervals) in at least one of the scenarios. Standard errors are obtained by repeating the experiment 10 times.

| Dataset (N, D) | SGP | MF DGP | | STAR DGP | |
|---|---|---|---|---|---|
| | L1 | L2 | L3 | L2 | L3 |
| boston (506,13) | - 3.49 (0.23) | **-3.36 (0.17)** | **-3.41 (0.19)** | **-3.38 (0.18)** | **-3.38 (0.18)** |
| energy (768, 8) | -2.90 (0.63) | -3.02 (0.64) | -3.45 (0.86) | -3.08 (0.78) | -2.95 (0.74) |
| concrete (1030, 8) | -3.91 (0.11) | **-3.76 (0.10)** | **-3.71 (0.09)** | **-3.79 (0.08)** | **-3.68 (0.08)** |
| wine red (1599,11) | -1.01 (0.02) | -1.02 (0.02) | -1.01 (0.02) | -1.01 (0.02) | -1.01 (0.02) |
| kin8nm (8192, 8) | 0.66(0.04) | **0.96(0.03)** | **0.98(0.04)** | **0.98(0.02)** | **0.94 (0.03)** |
| power (9568, 4) | -3.44 (0.29) | -3.81 (0.30) | -3.82 (0.31) | -3.95 (0.33) | -3.82 (0.27) |
| naval (11934,16) | 3.20(0.32) | 2.33(0.43) | 2.26(0.37) | 2.20(0.22) | 2.95(0.27) |
| protein (45730, 9) | -3.20 (0.04) | -3.31 (0.04) | -3.23 (0.06) | -3.23 (0.04) | **-3.19 (0.05)** |

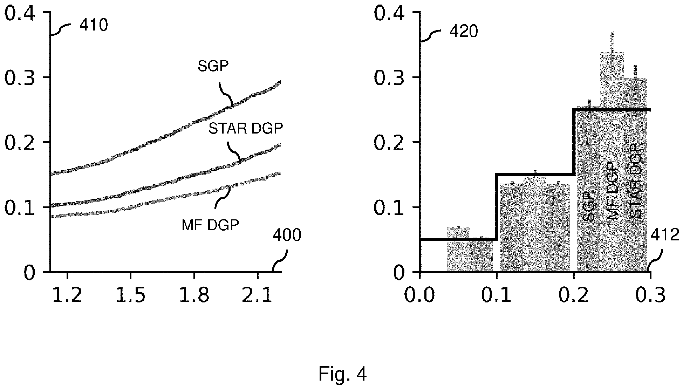

In the following, these results are further analyzed beginning with a comparison of the variational approaches, in which reference is made to Fig. 4 which is generated the *kin8nm* UCI dataset, with a median filter for the left-hand graph of Fig. 4. This left-hand graph shows that the predicted variance $\sigma_*^2$ (vertical axis 410) increases as one moves away from the training data (distance to the training set along the horizontal axis 400). While the predicted variances increase for all methods as a function of the distance to the training data, it can be seen that, at any given distance, the uncertainty decreases from SGP to STAR DGP to MF DGP. The right-hand graph of Fig. 4 is generated by binning the test samples according to their predicted variance (horizontal axis 412) and comparing the empirical mean squared error (vertical axis 420) of these groups with this quantity. If the mean squared error is larger than the predicted variance, the latter underestimates the uncertainty. In general, the right-hand graph shows that the mean squared errors also grew with larger $\sigma_*^2$. The mean squared error is an empirical unbiased estimator of the variance $\mathrm{Var}_* = \mathbb{E}[(y_* - \mu_*)^2]$ where $y_*$ is the test output and $\mu_*$ the mean predictor. The predicted variance $\sigma_*^2$ is also an estimator of Var$_*$. It is only unbiased if the method is calibrated. However, it was observed for the mean-field approach that, when moving away from the training data, the mean squared error was larger than the predicted variances pointing towards underestimated uncertainties. While the mean squared error for SGP matched well with the predictive variances, the predictions are rather inaccurate as demonstrated by the large predicted variances. The stripes-and-arrow approximation method reaches a good balance between these two methods, having generally more accurate mean predictions than the SGP and at the same time more accurate variance predictions than the MF DGP.

**Runtime**

The impact of the variational family on the runtime was compared between different types of variational families as a function of the number of inducing points $M$, the number of layers $L$ and the number of latent GPs $\tau$ per intermediate layer. As default architecture, the following parameters were selected: $L = 3$, $\tau = 5$, $M = 128$, which were then varied independently from each other. The runtime of the different approximations was assessed for a single gradient update (for which $R = 5$ samples, see Alg. 2) averaged over 2000 updates on a 6 core i7-8700 CPU using a mini-batch size of 512 and the known Adam optimizer. For the fully-coupled (FC) variational model, the runtime was also recorded when employing natural gradients. The results can be seen in Fig. 5, which shows the runtime of the stripes-and-arrow approximation (STAR DGP) versus the fully coupled (FC DGP) and the mean-field approach (MF DGP) on the *protein* UCI dataset. Shown is the runtime of one gradient step in seconds on a logarithmic scale (vertical axis 500) as a function of the number of inducing points $M$, the number of layers $L$ and the number $\tau$ of latent GPs per intermediate layer. The dotted grey lines show the theoretical scaling of the runtime of the STAR DGP for the most important term $\mathcal{C}\ (NM^2\tau L^2)$. It can be seen from Fig. 5 that, except for $L = 1$, the order from fastest to slowest method was proportional to the complexity of the variational family: mean-field, stripes-and-arrow, fully-coupled DGP. For the standard setting, $L = 3$, $\tau = 5$, $M = 128$, the STAR approximation was only two times slower than the mean-field but three times faster than FC DGP (trained with Adam). This ratio stayed almost constant when the number of inducing outputs $M$ was changed, since the most important term in the computational costs scales as $\mathcal{C}\ (M^2)$ for all methods. When varying the number of layers $L$, it was confirmed that the coupled approaches scale with $\mathcal{C}\ (L^2)$, while the mean-field method scales with $\mathcal{C}\ (L)$. When increasing the number of GPs per layer $\tau$, one could observe that, in line with the theoretical findings, the mean-field DGP and the sparse stripes-and-arrow DGP scale more favorably than the fully-coupled DGP.

In general, it is noted that many developments in deep GPs alter the probabilistic model, for example to allow for multiple outputs, multiple input sources, latent features or for interpreting the latent states as differential flows. The stripes-and-arrow approximation can be easily adapted to any of these models and is therefore a useful addition to the current set of inference engines for deep GP models.

Fig. 6 shows the training system 100 of Fig. 1 in the context of a test bench. Operating a test bench may in general comprise testing a computer-controlled entity 600 by providing control input to the computer-controlled entity 600 to control an operation of the computer-controlled entity and observing output associated with computer-controlled entity 600 which results from the operation of the computer-controlled entity 600. The training system 100 may be used with such a test bench, for example to train the machine learnable model using active learning, or to verify whether the DGP model is trained to accurately model the relation between control input and observed output, or to simulate such a test bench, etc. In general, the system 100 may comprise a control interface 160 which may be configured to provide control input data 162 to the computer-controlled entity 600. Such control input data 162 may represent control input as described elsewhere in this specification. In a specific example, the control input data 162 may control an actuator which is part of the computer-controlled entity 600. For example, the actuator may be an electric, hydraulic, pneumatic, thermal, magnetic and/or mechanical actuator. Specific yet nonlimiting examples include electrical motors, electroactive polymers, hydraulic cylinders, piezoelectric actuators, pneumatic actuators, servomechanisms, solenoids, stepper motors, etc. In other examples, the control input data 162 may control other aspects of the operation of the computer-controlled entity 600, such as a compression ratio, an ignition timing, etc.

The system 100 is further shown to comprise a sensor interface 180 configured to receive sensor data 182 from one or more sensors 620, which are shown in Fig. 6 to be located in an environment 610 of the computer-controlled entity 600. In some embodiments, the sensor(s) 620 may be part of the computer-controlled entity 600. In other embodiments, the sensor(s) 620 may be arranged in physical proximity to the computer-controlled entity. The physical proximity may be such that the relevant output may still be measured by the sensor(s) 620. The sensor(s) 620 may have any suitable form, and may in general be configured to measure a physical quantity which may be affected by the operation of the computer-controlled entity 600. In some embodiments, the sensor data 182 may represent sensor measurements of different physical quantities in that it may be obtained from two or more different sensors sensing different physical quantities. Examples of sensors include temperature sensors, encoders, pressure sensors, humidity sensors etc.

The control interface 160 may have any suitable form, such as a low-level communication interface, e.g., based on I2C or SPI data communication, an electronic bus, a wired or wireless network interface, or a data storage interface of a type as described elsewhere for the data storage interface 140. The sensor interface 180 may have any suitable form corresponding in type to the type of sensor 620, including but not limited to a low-level communication interface, an electronic bus, a wired or wireless network interface or a data storage interface of a type as described elsewhere for the data storage interface 140.

In some embodiments, the system 100 may train the machine learnable model using training data obtained from the test bench. In other embodiments, the system 100 may train the machine learnable model using active learning by using an uncertainty estimate provided by the machine learnable model to identify other control input to be tested.

Such other control input may be provided automatically or semi-automatically to the computer-controlled entity 600 via the control interface 160. As such, the testing of the computer-controlled entity 600 may be at least partly automated. The subsequent measurement of output data may also be at least partly automated. Having identified other control input and having observed corresponding output, the system 100 may then retrain the machine learnable model using the other control input and associated other observed output. This process may be repeated until a criterion is reached indicating that the machine learnable model has been sufficiently trained. It is noted that in other embodiments, the system 100 may train the machine learnable model and may after training simulate a test bench, in that it may allow 'virtual' testing of the computer-controlled entity by providing a test input to the DGP model, with the model in turn predicting the output of the computer-controlled entity. In yet other embodiments, the system 100 may infer an output which results from the operation of the computer-controlled entity 600 under control of a given control input, and may use the inferred output to control the computer-controlled entity 600.

In general, each system described in this specification, including but not limited to the system 100 of Fig. 1 and of Fig. 7, may be embodied as, or in, a single device or apparatus, such as a workstation or a server. The device may be an embedded device. The device or apparatus may comprise one or more microprocessors which execute appropriate software. For example, the processor subsystem of the respective system may be embodied by a single Central Processing Unit (CPU), but also by a combination or system of such CPUs and/or other types of processing units. The software may have been downloaded and/or stored in a corresponding memory, e.g., a volatile memory such as RAM or a non-volatile memory such as Flash. Alternatively, the processor subsystem of the respective system may be implemented in the device or apparatus in the form of programmable logic, e.g., as a Field-Programmable Gate Array (FPGA). In general, each functional unit of the respective system may be implemented in the form of a circuit. The respective system may also be implemented in a distributed manner, e.g., involving different devices or apparatuses, such as distributed local or cloud-based servers. In some embodiments, the system 100 may be part of vehicle, robot or similar physical entity, and/or may be represent a control system configured to control the physical entity.

**Fig. 7** shows a computer-implemented method 700 for operating a test bench. The method 700 may correspond to an operation of the system 100 of Fig. 1, but may also be performed using or by any other system, machine, apparatus or device.

The computer-implemented method 700 is shown to comprise, in a step titled "PROVIDING CONTROL INPUT TO COMPUTER-CONTROLLED ENTITY", testing 710 a computer-controlled entity by providing control input to the computer-controlled entity to control an operation of the computer-controlled entity. The method 700 is further shown to comprise, in a step titled "OBSERVING OUTPUT ASSOCIATED WITH COMPUTER-CONTROLLED ENTITY", observing 720 output associated with computer-controlled entity which results from the operation of the computer-controlled entity. The method 700 is further shown to comprise, in a step titled "TRAINING DGP MODEL ON CONTROL INPUT AND OBSERVED OUTPUT", using the computer-implemented training method as described in this specification for training 730 a machine learnable model to learn an unknown function $f$ which represents a relation between the control input and the observed output, wherein the training data for the machine learnable model comprises point-pairs of respective control input and observed output. The method 700 is further shown to comprise, in a step titled "IDENTIFYING OTHER CONTROL INPUT TO BE TESTED", using the machine learnable model for active learning by using an uncertainty estimate provided by the machine learnable model for identifying 740 other control input to be tested. The other control input may then be tested by a repetition of step 710, which may again be followed by the execution of steps 720, 730 and in some cases repeated execution of steps 710-740.

It will be appreciated that, in general, the operations or steps of the computer-implemented methods 200 and 700 of respectively Figs. 2 and 7 may be performed in any suitable order, e.g., consecutively, simultaneously, or a combination thereof, subject to, where applicable, a particular order being necessitated, e.g., by input/output relations.

Each method, algorithm or pseudo-code described in this specification may be implemented on a computer as a computer implemented method, as dedicated hardware, or as a combination of both. As also illustrated in Fig. 8, instructions for the computer, e.g., executable code, may be stored on a computer-readable medium 800, e.g., in the form of a series 810 of machine-readable physical marks and/or as a series of elements having different electrical, e.g., magnetic, or optical properties or values. The executable code may be stored in a transitory or non-transitory manner. Examples of computer-readable mediums include memory devices, optical storage devices, integrated circuits, servers, online software, etc. Fig. 8 shows an optical disc 800. In an alternative embodiment of the computer-readable medium 800, the computer-readable medium may comprise model data 810 defining a trained DGP model as described elsewhere in this specification.

Examples, embodiments or optional features, whether indicated as nonlimiting or not, are not to be understood as limiting the invention as claimed.

Mathematical symbols and notations are provided for facilitating the interpretation of the invention and shall not be construed as limiting the claims.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or stages other than those stated in a claim. The article "a" or "an" preceding an element does not exclude the presence of a plurality of such elements. Expressions such as "at least one of" when preceding a list or group of elements represent a selection of all or of any subset of elements from the list or group. For example, the expression, "at least one of A, B, and C" should be understood as including only A, only B, only C, both A and B, both A and C, both B and C, or all of A, B, and C. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

**Claims**

1. A computer-implemented method (200) of training a machine learnable model to learn an unknown function $f$ which represents a relation between control input of a computer-controlled entity and observable output which results from an operation of the computer-controlled entity under control of the control input, the method comprising:

   - accessing model data (210) representing the machine learnable model, wherein the machine learnable model is a Deep Gaussian Process, DGP, model, wherein the DGP model comprises a hierarchy of layers $L$ comprising at least one hidden layer and an output layer, wherein each layer of the hierarchy comprises a number of Gaussian Processes, GPs, and wherein the output layer additionally comprises a likelihood function;
   - accessing training data (220) comprising pairs of input points $x_N$ representing the control input and observed output points $y_N$ representing observed output;
   - training the DGP model (230) using the training data to learn the unknown function $f$ by learning a posterior probability distribution p over the unknown function $f$, wherein the training comprises executing an algorithm which uses variational inference to approximate the posterior probability distribution $p$ by an approximated probability distribution $q$, said approximating comprising maximizing an evidence lower bound $\mathcal{L}$ with respect to a set of parameters of the respective GPs so as to fit the DGP model to the training data,

   wherein the algorithm (240, 250, 260) comprises calculating the evidence lower bound $\mathcal{L}$ based on sampled layer outputs $f_n$ of respective layers of the DGP model, wherein a layer output at a respective layer is defined by the algorithm to be distributed according to a multivariate Gaussian distribution, and wherein calculating the sampled layer outputs $f_n$ comprises:

   - for each layer, calculating a mean $\mu_n$ and a covariance $\Sigma_n$ of the multivariate Gaussian distribution by:

       calculating respective base values for the mean $\mu_n$ and the covariance $\Sigma_n$ by a mean-field approximation which assumes independence between GPs,
       for each GP in each hidden layer except for a first hidden layer, applying a correction term to the respective base values which establishes a selective coupling to GPs at a same position in previous hidden layers, and for each GP in the output layer, applying a correction term to the respective base values which establishes a selective coupling to GPs at each position in each previous hidden layer; and

   - obtaining the sampled layer outputs $f_n$ by sampling the multivariate Gaussian distribution as parameterized by the mean $\mu_n$ and the covariance $\Sigma_n$.

2. The computer-implemented method (200) according to claim 1, wherein the approximation by the variational inference is a sparse approximation in which inducing input points $x_M$ are used, with $M << N$, to generate inducing function outputs $f_M$ which act as global latent parameters of the DGP model.

3. The computer-implemented method (200) according to claim 2, in which the variational inference searches for an approximated probability distribution $q(f_N|f_M)q(f_M)$ for the posterior probability distribution $p(f_N,f_M|y_N)$, wherein the inducing function outputs $f_M$ are distributed according to a multivariate Gaussian distribution.

4. The computer-implemented method (200) according to claim 3, wherein each correction term is calculated based on a variational posterior over the inducing outputs $f_M$ and the sampled layer outputs $f_n$ of previous layers, wherein the correction term for the mean $\mu_n$ is a weighted sum of residuals of the previous layers, wherein the correction term for the covariance $\Sigma_n$ is a weighted sum over a precision matrix of the previous layers, wherein weights for said weighted sums are obtained from a covariance matrix $S_M$, wherein elements of the covariance matrix $S_M$ inferred during training at select positions representing the coupling between GPs at the same position in different hidden layers and the coupling between GPs at each position in each hidden layer to the output layer.

**5.** The computer-implemented method (200) according to claim 4, wherein the algorithm comprises a nested loop which comprises:

- an outer loop (240) progressing through the hierarchy of layers $L$ towards the output layer, the outer loop being configured to use the sampled layer outputs $f_n$ of a respective layer to calculate the evidence lower bound $\mathcal{L}$ to be maximized;
- a middle loop (250) in which the mean $\mu_n$ and the covariance $\Sigma_n$ of the multivariate Gaussian distribution are calculated based on the respective base values and the respective correction terms and in which the multivariate Gaussian distribution is sampled; and
- an inner loop (260) in which elements of a covariance matrix $\tilde{S}_n$, which is needed for the calculation of the correction terms in the middle loop (250), are calculated for every sample based on the covariance matrix $S_M$.

**6.** The computer-implemented method (200) according to claim 5, wherein the outer loop (240) comprises averaging over multiple sampled layer outputs to reduce noise.

**7.** The computer-implemented method (200) according to claim 5, wherein the outer loop (240) comprises using only a subset of the training data.

**8.** The computer-implemented method (200) according to any one of claims 1 to 7, further comprising using the machine learnable model after training to infer an output which results from the operation of the computer-controlled entity under control of a given control input.

**9.** A method (700) of operating a test bench, comprising:

- testing (710) a computer-controlled entity by providing control input to the computer-controlled entity to control an operation of the computer-controlled entity;
- observing (720) output associated with computer-controlled entity which results from the operation of the computer-controlled entity;
- using the computer-implemented method according to any one of claims 1 to 7 to train (730) a machine learnable model to learn an unknown function $f$ which represents a relation between the control input and the observed output, wherein the training data for the machine learnable model comprises point-pairs of respective control input and observed output.

**10.** The method (700) according to claim 9, further comprising using the machine learnable model for active learning by using an uncertainty estimate provided by the machine learnable model to identify (740) other control input to be tested.

**11.** The method (700) according to claim 10, further comprising retraining (730) the machine learnable model using the other control input and associated other observed output.

**12.** The method (700) according to any one of claims 9 to 11, wherein the computer-controlled entity is one of a group of:

- a robotic system;
- a vehicle;
- a domestic appliance;
- a power tool;
- a manufacturing machine;
- a personal assistant device;
- an access control system
- a fuel cell; and
- an automotive component, such as a combustion engine.

**13.** A computer-readable medium (800) comprising transitory or non-transitory data (810) representing instructions arranged to cause a processor system to perform the computer-implemented method according to any one of claims 1 to 8.

**14.** A training system (100) for training a machine learnable model to learn an unknown function $f$ which represents a relation between control input (162) of a computer-controlled entity (600) and observable output (182) which results from an operation of the computer-controlled entity under control of the control input, the system comprising:

- an input interface (120) for:

- accessing training data (152) comprising pairs of input points $x_N$ representing the control input and observed output points $y_N$ representing observed output;
- accessing model data (154) representing the machine learnable model, wherein the machine learnable model is a Deep Gaussian Process, DGP, model, wherein the DGP model comprises a hierarchy of layers L comprising at least one hidden layer and an output layer, wherein each layer of the hierarchy comprises a number of Gaussian Processes, GPs, and wherein the output layer additionally comprises a likelihood function;

- a processor subsystem (140) configured for training the DGP model using the training data to learn the unknown function $f$ by learning a posterior probability distribution p over the unknown function $f$, wherein the training comprises executing an algorithm which uses variational inference to approximate the posterior probability distribution $p$ by an approximated probability distribution $q$, said approximating comprising maximizing an evidence lower bound $\mathcal{L}$ with respect to a set of parameters of the respective GPs so as to fit the DGP model to the training data,

wherein the algorithm comprises calculating the evidence lower bound $\mathcal{L}$ based on sampled layer outputs $f_n$ of respective layers of the DGP model, wherein a layer output at a respective layer is defined by the algorithm to be distributed according to a multivariate Gaussian distribution, and wherein calculating the sampled layer outputs $f_n$ comprises:

- for each layer, calculating a mean $\mu_n$ and a covariance $\Sigma_n$ of the multivariate Gaussian distribution by:

calculating respective base values for the mean $\mu_n$ and the covariance $\Sigma_n$ by a mean-field approximation which assumes independence between GPs, for each GP in each hidden layer except for a first hidden layer, applying a correction term to the respective base values which establishes a selective coupling to GPs at a same position in previous hidden layers, and for each GP in the output layer, applying a correction term to the respective base values which establishes a selective coupling to GPs at each position in each previous hidden layer; and

- obtaining the sampled layer outputs $f_n$ by sampling the multivariate Gaussian distribution as parameterized by the mean $\mu_n$ and the covariance $\Sigma_n$.

**15.** A test bench system comprising:

- the training system (100) according to claim 14;
- at least one sensor (610) for measuring the observable output which results from the operation of the computer-controlled entity under control of the control input.

Fig. 1

Fig. 2

Fig. 3

Fig. 4

Fig. 5

Fig. 6

700

710

720

730

740

Fig. 7

800

810

Fig. 8

Europäisches
Patentamt

European
Patent Office

Office européen
des brevets

# EUROPEAN SEARCH REPORT

**Application Number**

EP 20 17 5440

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/019464 A1 (NGUYEN-TUONG THE DUY [DE] ET AL) 15 January 2015 (2015-01-15) * paragraphs [0032] - [0038]; figure 1 * * paragraphs [0045] - [0056]; figure 2 * ----- | 1-15 | INV. G06N7/00 |
| X | HUGH SALIMBENI ET AL: "Deeply Non-Stationary Gaussian Processes", NIPS 2017, 4 December 2017 (2017-12-04), XP055591536, * the whole document * ----- | 1-15 | |
| X | ESTEBAN ÁNGEL E ET AL: "A new optical density granulometry-based descriptor for the classification of prostate histological images using shallow and deep Gaussian processes", COMPUTER METHODS AND PROGRAMS IN BIOMEDICINE, ELSEVIER, AMSTERDAM, NL, vol. 178, 4 July 2019 (2019-07-04), pages 303-317, XP085763845, ISSN: 0169-2607, DOI: 10.1016/J.CMPB.2019.07.003 [retrieved on 2019-07-04] * the whole document * ----- | 1-15 | TECHNICAL FIELDS SEARCHED (IPC)  G06N |

The present search report has been drawn up for all claims

| Place of search | Date of completion of the search | Examiner |
|---|---|---|
| The Hague | 4 December 2020 | Suarez Y Gonzalez, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 17 5440

This annex lists the patent family members relating to the patent documents cited in the above-mentioned European search report.
The members are as contained in the European Patent Office EDP file on
The European Patent Office is in no way liable for these particulars which are merely given for the purpose of information.

04-12-2020

| Patent document cited in search report | Publication date | Patent family member(s) | Publication date |
|---|---|---|---|
| US 2015019464 A1 | 15-01-2015 | DE 102013213397 A1<br>FR 3008506 A1<br>US 2015019464 A1 | 15-01-2015<br>16-01-2015<br>15-01-2015 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SNELSON, EDWARD et al.** Sparse Gaussian Processes using Pseudo-inputs. *Advances in Neural Information Processing Systems 18 (NIPS 2005)*

- **SALIMBENI, HUGH et al.** *Doubly Stochastic Variational Inference for Deep Gaussian Processes, https://arxiv.org/abs/1705.08933*
- **USTYUZHANINOV, IVAN et al.** *Compositional uncertainty in deep Gaussian processes, https://arxiv.org/abs/1909.07698v3*